# EUROPÄISCHE PATENTSCHRIFT

(11) **EP 2 750 268 B1**
(45) Veröffentlichungstag und Bekanntmachung des Hinweises auf die Patenterteilung: **14.10.2015**
(21) Anmeldenummer: 12199518.7
(22) Anmeldetag: 27.12.2012
(51) Int. Cl.: F04D 13/06, H02K 5/22, H02K 11/00

(54) **Pumpenaggregat**
Pump power unit
Groupe motopompe

(43) Veröffentlichungstag der Anmeldung: 02.07.2014
(73) Patentinhaber: Grundfos Holding A/S, 8850 Bjerringbro (DK)
(72) Erfinder: Schuldt, Christian, 23858 Reinfeld (DE); Danielsen, Carl-Christian, 8550 Ryomgård (DK)
(74) Vertreter: Patentanwälte Vollmann & Hemmer

(56) Entgegenhaltungen:
- DE-A1- 10 065 796

## Beschreibung

Die Erfindung betrifft ein Pumpenaggregat mit einem Elektromotor, welcher ein Statorgehäuse und ein außen am Statorgehäuse befestigtes Elektronikgehäuse aufweist.

Bei bekannten Pumpenaggregaten ist zumeist ein Elektromotor in einem Statorgehäuse angeordnet, welches an einem Pumpengehäuse angebracht ist. Mit dem Elektromotor wird zumindest ein Laufrad angetrieben, welches sich im Pumpengehäuse befindet. An dem Statorgehäuse ist üblicherweise ein Elektronikgehäuse bzw. Klemmenkasten angeschraubt, in dem sich elektrische Anschlüsse und elektrische Bauelemente befinden, um den Elektromotor anzusteuern und / oder zu regeln.

Bei der Montage des Pumpenaggregats wird das Elektronikgehäuse mit seinem Unterteil mit dem Statorgehäuse verschraubt. Danach wird ein Deckel auf das Unterteil gesetzt und typischerweise wird der Deckel dann mit dem Unterteil verschraubt. Nachteilig an dieser Ausführungsform ist, dass sehr viele Arbeitsschritte in der Endmontage notwendig sind und gleichzeitig das Elektronikgehäuse vor der Endmontage offen gelagert und gehandhabt wird, so dass eine Beschädigung der in dem Elektronikgehäuse angeordneten Elektronik nicht auszuschließen ist.

DE 100 65 796 A1 offenbart ein Umwälzpumpenaggregat, bei welchem ein Elektronikgehäuse axialseitig auf das Statorgehäuse aufsteckbar ist. Problematisch ist, dass der so aufgesteckte Klemmenkasten nicht zusätzlich gesichert werden kann.

Vor diesem Hintergrund ist es Aufgabe der Erfindung, ein Pumpenaggregat dahingehend zu verbessern, dass ein Elektronikgehäuse auf einfache Weise sicher am Statorgehäuse befestigt werden kann, ohne das Elektronikgehäuse öffnen zu müssen.

Diese Aufgabe wird mit dem Pumpenaggregat mit den in Anspruch 1 angegebenen Merkmalen gelöst. Bevorzugte Weiterbildungen der Erfindung ergeben sich aus den Unteransprüchen, der nachfolgenden Beschreibung und den Zeichnungen.

Bei dem erfindungsgemäßen Pumpenaggregat mit einem Elektromotor, welcher ein Statorgehäuse und ein außen am Statorgehäuse befestigtes Elektronikgehäuse aufweist, ist das Elektronikgehäuse mit dem Statorgehäuse über zumindest ein Befestigungselement verbunden, welches innerhalb einer von den Außenwandungen des Elektronikgehäuses begrenzten Außenkontur des Elektronikgehäuses gelegen ist und bei geschlossenem Elektronikgehäuse zugänglich ist. Erfindungswesentlich ist, dass der Klemmenkasten bzw. das Elektronikgehäuse an dem Statorgehäuse durch ein Befestigungselement so befestigt wird, dass das Befestigungselement bei geschlossenem Elektronikgehäuse von außen zugänglich ist. Das bedeutet, dass das Elektronikgehäuse zum Befestigen nicht wie bei herkömmlichen Elektronikgehäusen geöffnet werden muss. Dies bedeutet insbesondere, dass der Innenraum des Elektronikgehäuses, in welchem elektrische und/oder elektronische Bauelemente angeordnet sind, zum Befestigen nicht geöffnet werden muss. Erfindungsgemäß ist das Befestigungselement bei geschlossenem Elektronikgehäuse von der Außenseite des Elektronikgehäuses her zu-gönglich, wobei dies nicht bedeutet, dass das Befestigungselement nicht durch ein Abdeckelement, wie beispielsweise eine Abdeckkappe, bei Nichtgebrauch überdeckt sein kann. Insbesondere könnte eine solche Abdeckkappe auch zur Abdichtung einer Öffnung für das Befestigungselement dienen. Zur Betätigung des Befestigungselementes kann ein solches Abdeckelement dann abgenommen werden ohne das Elektronikgehäuse selber öffnen zu müssen. Dennoch ist das Elektronikgehäuse erfindungsgemäß so ausgebildet, dass das Befestigungselement innerhalb der von den Außenwandungen des Elektronikgehäuses begrenzten Außenkontur gelegen ist, d. h. nicht nach außen über die Außenkontur des Elektronikgehäuses auskragt. Dies verbessert zum einen den optischen Eindruck des Elektronikgehäuses, zum anderen wird durch diese Gestaltung sichergestellt, dass das Befestigungselement oder die Befestigungselemente nicht bei der Handhabung und Lagerung versehentlich beschädigt werden können. Dass das Befestigungselement innerhalb der Außenkontur gelegen ist, bedeutet jedoch nicht, dass es von der Außenwandung überdeckt ist. Vielmehr ist das zumindest eine Befestigungselement so angeordnet, dass es von außen zur Befestigung des Elektronikgehäuses an dem Statorgehäuse zugänglich ist, beispielsweise durch eine Öffnung in einer Wandung des Elektronikgehäuses. Im Unterschied zum Stand der Technik ist es daher erfindungsgemäß möglich, das schon vor der Montage geschlossene Elektronikgehäuse an dem Statorgehäuse mit dem zumindest einen Befestigungselement von außen her zu befestigen und, falls notwendig und erwünscht, vorzugsweise auch wieder zu lösen. Das Elektronikgehäuse kann somit als komplett vormontierte Baueinheit montiert werden. So wird verhindert, dass im Elektronikgehäuse befindliche Teile, beispielsweise elektrische Bauelemente, bei der Endmontage des Elektronikgehäuses beschädigt werden.

Das Elektronikgehäuse weist zumindest ein Bodenteil und ein Deckelteil auf, wobei das zumindest eine Befestigungselement derart angeordnet ist, dass das.

Deckelteil vom Bodenteil unabhängig von dem Befestigungselement lösbar ist. Dies bedeutet, dass das Deckelteil von dem Bodenteil abgenommen werden kann, ohne dass das Elektronikgehäuse vom Statorgehäuse getrennt werden muss. So lässt sich das

Elektronikgehäuse zwar im geschlossenen Zustand an dem Statorgehäuse montieren, da das Befestigungselement im geschlossenen Zustand von außen zugänglich ist, dennoch lässt sich das Elektronikgehäuse auch im montierten Zustand öffnen. So ist es oftmals vorteilhaft, in das Elektronikgehäuse eingreifen zu können, beispielsweise um Reparaturen oder Wartungen vorzunehmen, ohne das gesamte Elektronikgehäuse vom Statorgehäuse lösen zu müssen.

Eine weitere bevorzugte Ausführungsform sieht vor, dass das Elektronikgehäuse eine Grundfläche aufweist, welche sich an zumindest einer Seite über eine Außenkontur des Statorgehäuses hinaus erstreckt und vorzugsweise größer als eine angrenzende Außenseite des Statorgehäuses ist. Das bedeutet, das Elektronikgehäuse erstreckt sich vorzugsweise in der Richtung seines Bodens, welcher an die Außenseite des Statorgehäuses angrenzt, in zumindest einer Richtung über die Außenkontur des Statorgehäuses hinaus. Bevorzugt ist dabei die Grundfläche, welche von dem Boden gebildet wird, größer als diese angrenzende Außenseite des Statorgehäuses. So kann das Elektronikgehäuse beispielsweise axialseitig an das Statorgehäuse angesetzt sein und eine Grund- bzw. Bodenfläche quer zur Längsachse des Stators aufweisen, welche größer als die axiale Stirnseite des Statorgehäuses ist. Beispielsweise kann das Elektronikgehäuse zu einer Radialseite hin über das Statorgehäuse oder aber auch zu mehreren Axialseiten oder vollumfänglich über das Statorgehäuse auskragen. In dem Fall, dass das Elektronikgehäuse radialseitig bzw. umfangsseitig an das Statorgehäuse angesetzt ist, kann sich das Statorgehäuse beispielsweise in axialer Richtung über ein Stirnende des Statorgehäuses hinaus erstrecken. Alternativ oder zusätzlich kann sich das Elektronikgehäuse in tangentialer Richtung über die Ausdehnung des Statorgehäuses hinaus erstrecken, beispielsweise in tangentialer Richtung eine größere Breite als der Durchmesser des Statorgehäuses aufweisen. So kann innerhalb des Elektronikgehäuses ausreichend Platz für notwendige elektronische Bauelemente und / oder Anschlüsse erzielt werden, von denen zumindest einige vorzugsweise auf zumindest einer Leiterplatte im Elektronikgehäuse angeordnet sind.

Weiterhin vorteilhaft kann es sein, wenn das Elektronikgehäuse axial an dem Statorgehäuse befestigt ist. Die axiale Richtung ist dabei durch die Längs- bzw. Drehachse des im Statorgehäuse angeordneten Rotors definiert. Die axiale Anordnung des Elektronikgehäuses bedeutet, dass das Elektronikgehäuse an eine axiale Stirnseite des Statorgehäuses angesetzt ist, vorzugsweise an eine einem Pumpengehäuse abgewandte axiale Stirnseite. Die axiale bzw. axialseitige Anordnung des Elektronikgehäuses an dem Statorgehäuse kann die Bedienung oder ein Ablesen am Elektronikgehäuse vorhandener Anzeige- und Bedienelemente erleichtern.

Eine weitere bevorzugte Ausbildung sieht vor, dass das Befestigungselement das Elektronikgehäuse quer, insbesondere senkrecht zu der Längsachse des Stators durchgreift. Eine solche Anordnung des zumindest einen Befestigungselementes hat den Vorteil, dass das Elektronikgehäuse zumindest in Teilbereichen frei von das Elektronikgehäuse axial durchgreifenden Befestigungselementen gehalten werden kann. So kann das Befestigungselement beispielsweise in der Nähe des Bodens des Elektronikgehäuses angeordnet werden und quer zur Längsachse des Statorgehäuses in das Elektronikgehäuse eingreifen. So bleibt der dem Boden weiter abgewandte Innenraum des Elektronikgehäuses frei von dem Befestigungselement, so dass sich dort beispielsweise eine Leiterplatte quer zur Längsachse erstrecken kann, ohne dass diese von Befestigungselementen durchgriffen werden müsste. Beispielsweise ist es so auch möglich, an der dem Statorgehäuse abgewandten Oberseite bzw. dem Deckel des Elektronikgehäuses ein großes Display anzuordnen, da in diesem Bereich dann keine Befestigungselemente angeordnet werden müssen. Ein solches Display kann dann insbesondere eine Ausdehnung haben, welche in der Projektion im Wesentlichen der Fläche des unter dem Elektronikgehäuse angeordneten Statorgehäuses, beispielsweise der axialen Stirnseite des Statorgehäuses bei axialer Anordnung des Elektronikgehäuses, entspricht. Das Elektronikgehäuse kann so diesen gesamten Raum einnehmen, da am Deckel des Elektronikgehäuses keine Befestigungselemente angeordnet werden müssen.

Es ist ferner bevorzugt, wenn das Deckelteil und das Bodenteil des Elektronikgehäuses miteinander verschraubt sind. Dies hat den Vorteil, dass sich das Elektronikgehäuse beispielsweise zu Reparaturzwecken problemlos öffnen lässt, da so eine lösbare Verbindung zwischen Deckelteil und Bodenteil hergestellt wird. Das Bodenteil und das Deckelteil des Elektronikgehäuses können jedoch auch auf andere Weise miteinander verbunden sein, beispielsweise verrastet. Bevorzugt ist das Elektronikgehäuse zumindest spritzdicht verschlossen, um das Eindringen von Flüssigkeiten in das Gehäuse zu verhindern. So ist vorzugsweise zwischen dem Deckelteil und dem Bodenteil eine Dichtung angeordnet, welche mit dem Deckelteil und / oder dem Bodenteil fest verbunden sein kann, beispielsweise im Spritzguss direkt angegossen sein kann.

Ferner ist das Bodenteil mit zumindest einer Schraube als Befestigungselement, vorzugsweise mit zwei Schrauben, an dem Statorgehäuse befestigt und das Deckelteil weist zumindest eine der Schraube in Richtung deren Längsachse gegenüberliegende Öffnung auf, wobei der Raum zwischen der Schraube und der Öffnung frei ist. Das bedeutet, dass im Inneren des Elektronikgehäuses zwischen der Schraube und der Öffnung in dem Deckelteil keine weiteren Bauteile angeordnet sind, so dass zwischen der Schraube und der Öffnung ein Freiraum besteht. Idealerweise erstreckt sich dieser Freiraum in axialer Projektion in Richtung der Schraubenlängsachse von der Öffnung zu der Schraube hin. Dies ermöglicht es, dass die Schraube bei geschlossenem Elektronikgehäuse durch die Öffnung hindurch eingesetzt und / oder ein Schraubwerkzeug durch die Öffnung eingeführt werden kann, um die Schraube zu drehen und so das geschlossene Elektronikgehäuse mit dem Statorgehäuse zu verschrauben. Die Öffnung und der freigehaltene Bereich zwischen der Öffnung und der Schraube ermöglichen somit den Zugriff auf die Schraube, ohne dafür vorher das Deckelteil vom Bodenteil entfernen zu müssen. Dies ist besonders vorteilhaft bei der Montage, da somit das aus dem Deckelteil und dem Bodenteil vormontierte Elektronikgehäuse mit zumindest einer Schraube, welche durch die genannte Öffnung im Deckelteil und den genannten freien Raum geführt wird, mit dem Statorgehäuse verschraubt werden kann. Die Befestigung über zwei Schrauben bietet den Vorteil, dass hiermit eine stabilere und drehfeste Verbindung hergestellt werden kann. Ferner können mehrere Auflagepunkte zwischen Elektronikgehäuse und Statorgehäuse vorhanden sein, wobei diese Auflagepunkte vorzugsweise nicht an den oder nahe der Befestigungspunkte der Schrauben liegen. So kann sich das Elektronikgehäuse an dem Statorgehäuse an mehreren, vorzugsweise voneinander beabstandeten Auflagepunkten abstützen, so dass eine kippfeste Anlage des Elektronikgehäuses an dem Statorgehäuse realisiert wird. Zusätzlich zu den Verschraubungen kann es von Vorteil sein, wenn das Elektronikgehäuse und das Statorgehäuse z. B. durch geeignete Vorsprünge und / oder Ausnehmungen gegenseitig verklemmen, verhaken und / oder ineinander einrasten.

Die Schrauben, welche das Elektronikgehäuse an dem Statorgehäuse befestigen, sind in dem Elektronikgehäuse vorzugsweise so angeordnet, dass sie ein Unterteil bzw. Bodenteil des Elektronikgehäuses an dem Statorgehäuse fixieren, jedoch nicht mit einem das Unterteil verschließenden Deckelteil des Elektronikgehäuses fixierend in Eingriff treten. Das Deckelteil wird somit unabhängig von den Schrauben zur Befestigung des Elektronikgehäuses an dem Statorgehäuse mit dem Bodenteil verbunden. Dies hat den Vorteil, dass das Elektronikgehäuse unabhängig von seiner Befestigung an dem Statorgehäuse geöffnet werden kann. D. h. das Deckelteil kann von dem Bodenteil abgenommen werden, ohne die Schrauben, welche das Elektronikgehäuse bzw. dessen Unterteil an dem Statorgehäuse fixieren, lösen zu müssen.

Weiterhin ist es bevorzugt, wenn die zumindest eine Öffnung im Deckelteil durch eine an der dem Bodenteil abgewandten Seite des Deckelteils angeordnete Deckfolie überdeckt ist. Die Folie kann die Öffnung dicht verschließen. Somit kann beispielsweise das Eindringen von Feuchtigkeit durch die Öffnung verhindert werden. Ebenso verhindert die Deckfolie den Zugriff von außen, beispielsweise an die Schrauben nach der Montage. Die Deckfolie kann dabei Beschriftungen und / oder Gestaltungselemente für am Deckelteil vorhandene Bedien- und Anzeigeelemente aufweisen, so dass hier mit einer Deckfolie Gestaltungs-elemente für das Deckelteil angebracht und gleichzeitig die Öffnung im Deckelteil verschlossen werden kann.

Die Deckfolie ist weiter bevorzugt mit dem Deckelteil verklebt. Dieses Verkleben einer Folie ist technisch einfach realisierbar und kann eine dichte Verbindung bewirken. Des Weiteren kann sie den zerstörungsfreien Zugang zu den Schrauben, welche das Elektronikgehäuse an dem Statorgehäuse fixieren,verhindern, wenn diese wie oben beschrieben durch die Deckfolie nach außen überdeckt sind.

Eine weitere bevorzugte Ausführungsform sieht vor, dass die Schrauben, welche das Deckelteil mit dem Bodenteil verbinden, nicht von der

Deckfolie überdeckt sind. Das Deckelteil kann somit entfernt werden, ohne dazu die Deckfolie zu beschädigen. Ein zerstörungsfreies Öffnen des Elektronikgehäuses, beispielsweise für Reparaturen und Wartungen oder zum Entfernen des Elektronikgehäuses vom Statorgehäuse, ist somit ermöglicht.

Weiterhin ist es bevorzugt, wenn die zumindest eine Schraube in ein Innengewinde an einer Wandung des Statorgehäuses eingreift. Bei axialer Anordnung des Elektronikgehäuses an dem Statorgehäuse kann zumindest eine Ausnehmung mit einem entsprechenden Innengewinde an der Axialseite des Statorgehäuses ausgebildet sein. Bei radialseitiger Anordnung kann eine Ausnehmung mit einem Innengewinde an einer Umfangsseite des Statorgehäuses ausgebildet sein. Wenn das Statorgehäuse aus Metall ausgebildet ist, lässt sich ein solches Innengewinde gut in das Statorgehäuse einbringen. Auch bei einem Statorgehäuse aus Kunststoff lässt sich ein solches Innengewinde einbringen. Anstelle ein definiertes Innengewinde in eine Ausnehmung an dem Statorgehäuse einzubringen, können auch selbstschneidende Schrauben zur Befestigung verwendet werden. Dies gilt insbesondere dann, wenn das Statorgehäuse aus Kunststoff gefertigt ist. Die Öffnung im Deckelteil fluchtet vorzugsweise mit dem Innengewinde oder einem Loch an der Wandung des Statorgehäuses. So kann die genannte Schraube bei der Montage durch die Öffnung im Deckelteil in das genannte Innengewinde oder Loch eingesetzt werden.

Alternativ zu einem Innengewinde oder Loch kann an einer Wandung des Statorgehäuses zumindest ein Schraubenbolzen angelagert sein, welcher in das Elektronikgehäuse eingreift und mit zumindest einer Mutter im oder am Elektronikgehäuse befestigt ist. Die Mutter kann bevorzugt bei der Montage über die genannte Öffnung im Deckelteil an den Schraubbolzen geschraubt werden. Die Mutter kommt dabei zweckmäßigerweise wie bei der vorangehend beschriebenen Ausführungsform ein Schraubenkopf an einer Anlagefläche in dem Elektronikgehäuse zu liegen, welche dem Statorgehäuse abgewandt ist. Die Anlagefläche kann insbesondere im Unterteil des Elektronikgehäuses ausgebildet sein, so dass das Unterteil mit der Schraube oder der Mutter an dem Statorgehäuse befestigt wird.

Weiterhin ist es bevorzugt, wenn zumindest eine Führungshülse im Bodenteil des Elektronikgehäuses ausgebildet ist, durch welche sich die Schraube erstreckt. Beim Befestigen des Elektronikgehäuses am Statorgehäuse kann beispielsweise eine Schraube durch das Elektronikgehäuse in das Statorgehäuse geschraubt werden. Die vorzugsweise rohrförmige Führungshülse hat dabei zum einen den Vorteil, dass die Schraube in definierter Richtung geführt wird, so dass sie in vorgegebener Weise mit dem Innengewinde, in welches sie eingreifen soll, fluchtet. Dadurch wird die Montage vereinfacht. Zum anderen kann eine solche Führungshülse verhindern, dass beim Durchführen der Schraube durch das Elektronikgehäuse die Schraube im Elektronikgehäuse nahegelegene Teile, beispielsweise elektrische Bauteile, beschädigt. Die Führungshülse kann darüber hinaus auch so ausgestaltet sein, dass ein Kontakt eines Werkzeuges mit Bauteilen im Inneren des Elektronikgehäuses verhindert werden kann.

Eine besonders bevorzugte Ausführungsform beinhaltet, dass sich die Führungshülse im Bodenteil bis zu der Öffnung im Deckelteil erstreckt oder sich bis in die Öffnung im Deckelteil hinein erstreckt. So erstreckt sich die Führungshülse im Innenraum des Elektronikgehäuses bevorzugt zumindest bis an die Innenseite des Deckelteiles heran oder greift von der Innenseite des Deckelteiles her in die Öffnung ein. Am entgegengesetzten Axialende erstreckt sich die vorzugsweise im Wesentlichen rohrförmig ausgebildete Führungshülse bis zu einer Öffnung im Bodenteil des Elektronikgehäuses, welche dem Stator zugewandt ist und durch welche sich eine Schraube bzw. ein Schraubenbolzen zu dem Statorgehäuse hin erstreckt. Eine so geformte Führungshülse führt die Schraube oder einen Schraubenbolzen in dem freien Raum des Elektronikgehäuses bei der Montage, aber auch Demontage, und kann somit eine Beschädigung der im Elektronikgehäuse vorhandenen Teile wie genannte elektrische Bauelemente durch die Schraube oder ein Werkzeug verhindern. Das Erstrecken der Führungshülse bis an oder in die Öffnung kann dabei vorteilhaft verhindern, dass eine Schraube oder ein Werkzeug beispielsweise beim Einsetzen in die Öffnung des Deckelteils verrutschen und dann durch einen Spalt zwischen Führungshülse und Deckelteil in den Innenbereich des Elektronikgehäuses gelangen kann, welcher Teile wie elektrische Bauelemente enthält.

Bevorzugt liegt die Schraube mit einem Schraubenkopf oder als Mutter ausgebildet an einer axialen Stirnseite der Führungshülse an. Die Schraube bzw. Mutter liegt dabei an einer dem Statorgehäuse abgewandten axialen Stirnseite bzw. Anlagefläche der Führungshülse an und stützt sich somit an dieser Seite der Führungshülse ab. Am entgegengesetzten Ende der Führungshülse erstreckt sich die Schraube oder ein Schraubenbolzen, welcher mit der Mutter in Eingriff ist, zu dem Statorgehäuse hin und ist an diesem befestigt bzw. greift in ein Innengewinde an dem Statorgehäuse ein. So kann das Elektronikgehäuse, vorzugsweise dessen Unterteil, in welchem die Führungshülse ausgebildet ist, mittels der Schraube oder der Mutter an dem Statorgehäuse fixiert, insbesondere an dem Statorgehäuse in spielfreier Anlage gehalten werden. Die Führungshülse ist vorzugsweise ein Teil des Bodenteils des Elektronikgehäuses, insbesondere integral oder einstückig mit diesem ausgebildet, und endet an einer dem Statorgehäuse zugewandten Öffnung im Bodenteil des Elektronikgehäuses.

Weiter bevorzugt steht die Schraube nicht über die dem Bodenteil abgewandte Stirnseite des Deckelteils vor. So kann die dem Bodenteil abgewandte Außenseite des Deckelteiles von einer planen Deckfolie überdeckt werden, wodurch die unter dieser gelegenen Öffnungen bzw. Löcher und die darin angeordneten Schrauben von außen nicht sichtbar sind. So wird eine glatte bzw. plane Außenseite des Deckelteils geschaffen.

Weiterhin bevorzugt ist im Elektronikgehäuse zumindest eine Leiterplatte angeordnet, welche zumindest eine Ausnehmung aufweist, die der Schraube in Richtung deren Längsachse gegenüberliegt oder durch welche sich die Schraube hindurch erstreckt. Die Schraube dient wie beschrieben der Befestigung des Elektronikgehäuses an dem Statorgehäuse. Die Leiterplatte erstreckt sich vorzugsweise parallel zum Boden des Elektronikgehäuses, welcher dem Statorgehäuse zugewandt ist. Weiter bevorzugt erstreckt sich auch eine Außenfläche des Deckelteils bevorzugt parallel zu der Leiterplatte. Die zumindest eine Ausnehmung in der Leiterplatte stellt sicher, dass auch bei montierter Leiterplatte eine Schraube zur Fixierung des Elektronikgehäuses an dem Statorgehäuse von außen, d. h. insbesondere durch eine Öffnung in dem Deckelteil, zugänglich ist. Dazu kann sich die Schraube durch die Ausnehmung in der Leiterplatte hindurch erstrecken oder aber fluchtend zu der Ausnehmung so gelegen sein, dass ein Schraubwerkzeug durch die Ausnehmung in der Leiterplatte hindurch die Schraube ergreifen kann. So kann eine Leiterplatte bevorzugt den Innenraum des Elektronikgehäuses weitgehend ausfüllen und dennoch die erforderliche Zugänglichkeit der Schraube gewährleisten, welche erforderlich ist, um das vollständig montierte Elektronikgehäuse an dem Statorgehäuse befestigen zu können. Wenn eine Führungshülse, wie sie vorangehend beschrieben wurde, vorgesehen ist, durch welche die zumindest eine Schraube geführt ist, so kann sich die Führungshülse dabei ausgehend von dem Boden bzw. Bodenteil bis an die Leiterplatte heran erstrecken.

Bei einer besonders bevorzugten Ausführungsform erstreckt sich die Führungshülse durch die Ausnehmung in der Leiterplatte hindurch. Dieses kann für die Positionierung als auch die Verhinderung einer Beschädigung der Leiterplatte durch eine Schraube und / oder ein Werkzeug vorteilhaft sein. Bevorzugt kann sich die Führungshülse durch die Ausnehmung in der Leiterplatte hindurch von dem Bodenteil bis an eine Öffnung in dem Deckelteil oder bis in die Öffnung in dem Deckel hinein erstrecken, wie es oben beschrieben wurde.

Weiter bevorzugt ist zumindest eine elektrische Verbindung, insbesondere eine elektrische Steckverbindung, zwischen Statorgehäuse und Elektronikgehäuse vorhanden. Die elektrische Verbindung zwischen Elektronikgehäuse und Statorgehäuse sorgt insbesondere für die elektrische Verbindung der im Statorgehäuse angeordneten Statorspulen mit elektrischen und elektronischen Bauteilen im Inneren des Elektronikgehöuses. Über die elektrische Verbindung erfolgt somit die Energieversorgung des elektrischen Motors im Inneren des Statorgehäuses. Die elektronischen Bauelemente im Elektronikgehäuse übernehmen dabei vorzugsweise die Regelung des Antriebsmotors und können insbesondere einen Frequenzumrichter aufweisen. Ferner ist es möglich, beispielsweise aktuelle Daten, wie Drehgeschwindigkeit des Rotors und / oder Temperatur, zumindest von dem Elektromotor, auszulesen und im Elektronikgehäuse datentechnisch zu verarbeiten und / oder Anzeigeelemente in dem Elektronikgehäuse, z. B. auf dem Deckelteil, darzustellen. Die Ausführung der elektrischen Verbindung als Steckverbindung ist besonders vorteilhaft, da sie die Montage des Elektronikgehäuses an das Statorgehäuse einfach gestaltet. Das Anschließen von einzelnen Kabeln durch Löten oder Klemmen kann so vermieden werden. Bei der Steckverbindung ist die Steckrichtung bevorzugt in derselben Richtung gerichtet, in welcher das Elektronikgehäuse an das Statorgehäuse angesetzt wird. So wird durch die Steckverbindung beim Ansetzen des Elektronikgehäuses an das Statorgehäuse eine selbsttätige, automatische Kontaktierung erreicht. Vorzugsweise ist die Steckrichtung dabei parallel zu den Schrauben bzw. Bolzen gerichtet, mit welchen das Elektronikgehäuse gemäß der vorangehend beschriebenen bevorzugten Ausführungsform mit dem Statorgehäuse verschraubt ist.

Eine weitere bevorzugte Ausführungsform sieht vor, dass das Pumpenaggregat als Umwälzpumpenaggregat, vorzugsweise mit einem nasslaufenden Elektromotor, ausgebildet ist. Das Pumpenaggregat kann beispielsweise als Heizungsumwälzpumpe ausgebildet sein.

Die Erfindung ist nachfolgend beispielhaft anhand von in den Zeichnungen dargestellten Ausführungsbeispielen näher erläutert. Es zeigen:
- Fig. 1: eine Explosionsdarstellung eines Elektronikgehäuses und eines Statorgehäuses eines Pumpenaggregats mit einem seitlichen Befestigungselement, welches nicht erfindungsgemäß ausgebildet ist,
- Fig. 2: eine Draufsicht auf ein Pumpenaggregat mit dem Elektronikgehäuse, gemäß Fig. 1,
- Fig. 3: eine Seitenansicht des Pumpenaggregats gemäß Fig. 2,
- Fig. 4: eine Explosionsdarstellung einer erfindungsgemäße Ausführungsform eines axial an einem Statorgehäuse eines Pumpenaggregats befestigten Elektronikgehäuses,
- Fig. 5: eine Draufsicht eines Pumpenaggregats mit einem axial befestigten Elektronikgehäuse gemäß Fig. 4, und
- Fig. 6: einen Schnitt des Pumpenaggregats gemäß Fig. 5.

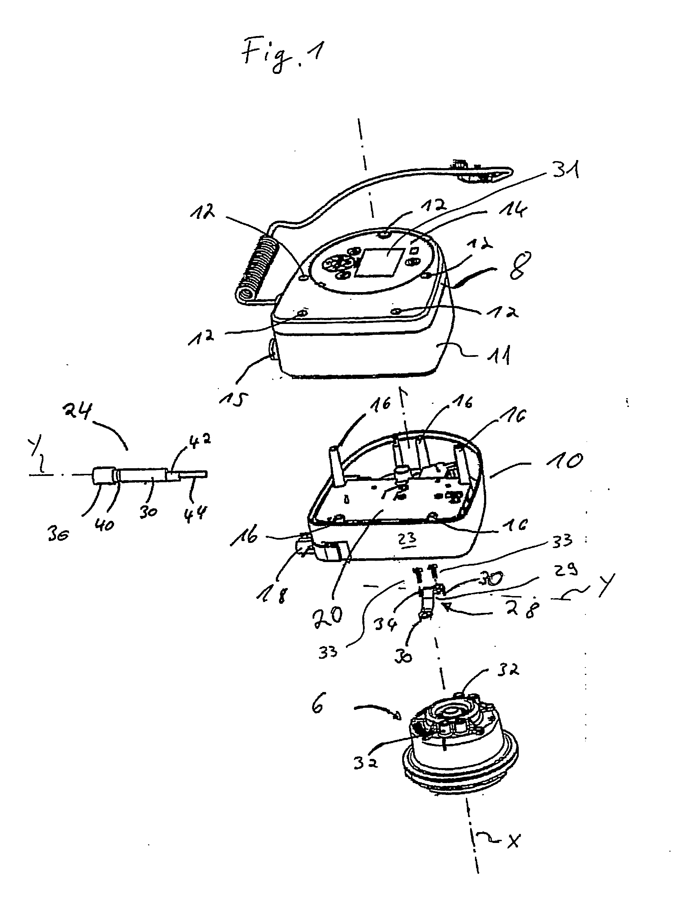

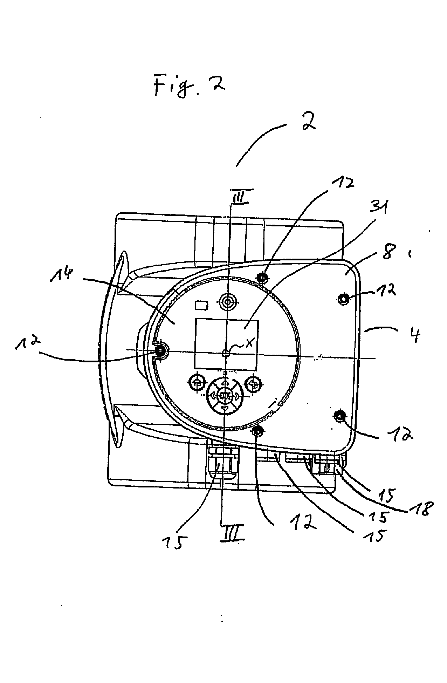

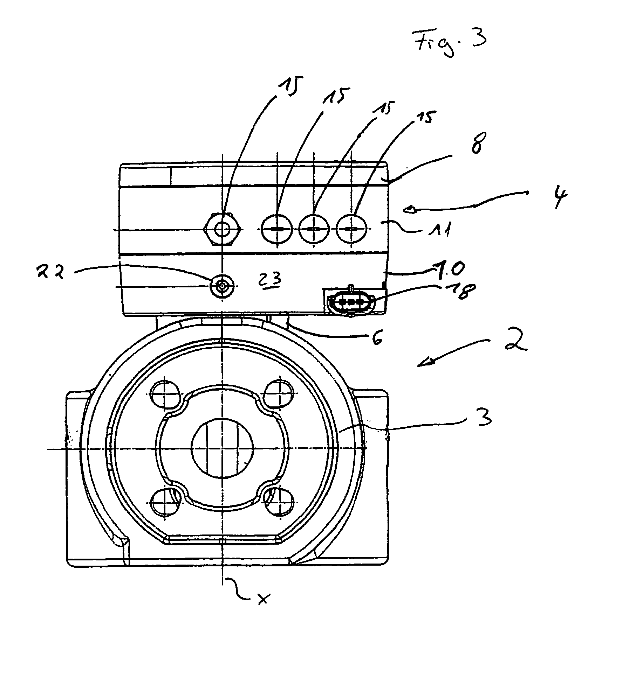

Figuren 1 - 4 zeigen ein Elektronikgehäuse, welches nicht erfindungsgemäß ausgebildet ist. Das als Umwälzpumpe mit nasslaufendem Elektromotor ausgebildete Pumpenaggregat 2 weist einen Klemmenkasten bzw. ein Elektronikgehäuse 4 auf, welches axial mit einem Statorgehäuse 6 eines Elektromotors verbunden ist. Axial bezieht sich dabei auf die Längs- bzw. Drehachse X des Rotors 5, welcher im Statorgehäuse 6 des Elektromotors angeordnet ist. Den Rotor 5 umgebend ist im Inneren des Statorgehäuses 6 ein mehrere Statorspulen aufweisender Stator 9 angeordnet. Das Statorgehäuse 6 ist an einem Pumpengehäuse 3 des Pumpenaggregats 2 befestigt und der Rotor 5 des Elektromotors ist drehfest mit einem Laufrad 7, welches im Pumpengehäuse 3 angeordnet ist, verbunden. Das Elektronikgehäuse 4 besteht dabei als vormontierte Baugruppe aus einem Deckelteil 8 und einem Bodenteil 10, welche miteinander verschraubt sind. An der axial vom Statorgehäuse 6 abgewandten Oberseite weist das Deckelteil 8 dazu Öffnungen 12 auf, welche entlang des Randes des Deckelteils 8 verteilt angeordnet sind. Das Deckelteil 8 und das Bodenteil 10 sind über die Schrauben 13 miteinander verbunden, wobei die Schrauben 13 durch die Öffnungen 12 des Deckelteils 8 in Befestigungshülsen 16 des Bodenteils 10 innerhalb des Elektronikgehäuses 4 greifen.

An der Oberseite des Deckelteils 8 befindet sich eine Deckfolie 14. Die Deckfolie 14 ist so angeordnet, dass keine der Öffnungen 12 im montierten Zustand des Pumpenaggregats 2 von der Deckfolie 14 verdeckt ist. Dazu ist in diesem Ausführungsbeispiel in der Deckfolie 14 eine Aussparung vorgesehen, welche mit einer der genannten Öffnungen 12 fluchtet, so dass auch diese Öffnung 12 nicht von der Deckfolie 14 überdeckt ist. Die Deckfolie 14 ist vorzugsweise mit dem Deckelteil 8 verklebt.

In dem hier gezeigten Beispiel ist das Elektronikgehäuse 4 dreiteilig ausgebildet, es weist zwischen dem Deckelteil 8 und dem Bodenteil 10 noch ein Zwischenteil 11 auf. Das Zwischenteil 11 weist eine ringförmige Außenwandung auf, welche mit den Außenwandungen umfänglich zur Längsachse X des Bodenteils 10 und des Deckelteils 8 fluchtet. Das Zwischenteil 11 bildet somit eine axiale Verlängerung des Bodenteils 10, um einen größeren Innenraum des Elektronikgehäuses 4 zu schaffen. Das Zwischenteil 11 wird zwischen dem Bodenteil 10 und dem Deckelteil 8 durch die Verschraubung zwischen Deckelteil 8 und Bodenteil 10 mittels der Schrauben 13 fixiert, wobei durch eine entsprechende Kontur an der Umfangswandung gleichzeitig ein formschlüssiger Eingriff erreicht wird, welcher ein Verschieben quer zur Längsachse X des Deckelteils 8, des Zwischenteils 11 und des Bodenteils 10 relativ zueinander verhindert. Um den Innenraum des Elektronikgehäuses 4 abzudichten, sind zwischen dem Zwischenteil 11 und dem Deckelteil 8 sowie zwischen dem Zwischenteil 11 und dem Bodenteil 10 bevorzugt umfängliche Dichtungen angeordnet, welche insbesondere an eines oder mehrere dieser Teile direkt angegossen sein können.

An zumindest einer Seitenfläche des Zwischenteils 11 sind vorzugsweise vier Kabeldurchführungen 15 angebracht. Das Bodenteil 10 weist an seiner seitlichen Außenwand zwischen den Kabeldurchführungen 15 und dem Statorgehäuse 6 einen elektrischen Anschluss 18 auf, welcher zum Innenraum des Elektronikgehäuses 4 abgedichtet ist. Der elektrische Anschluss 18 dient der Verbindung mit einer Netzanschlussleitung zur Stromversorgung des Pumpenaggregates. Die Kabeldurchführungen 15 dienen zur Anbindung externer Bauteile, wie beispielsweise Sensoren, an die Elektronik im Inneren des Elektronikgehäuses 4. Das Zwischenteil 11 stellt eine optionale Erweiterung des Elektronikgehäuses 4 dar. D. h. das Bodenteil 10 und das Deckelteil 8 sind so ausgebildet, dass sie auch direkt miteinander verbunden werden können, ohne das zwischenliegende Zwischenteil 11. So kann ein kleineres Elektronikgehäuse geschaffen werden, beispielsweise für den Fall, dass weniger elektronische Bauelemente, beispielsweise zur Kommunikation mit externen Bauteilen, wie z. B. Sensoren, in dem Elektronikgehäuse 4 angeordnet werden sollen. So wird ein modularer Aufbau geschaffen, welcher eine optionale Erweiterung des Elektronikgehäuses 4 für zusätzliche Funktionen ermöglicht. Innerhalb des Bodenteils 10 ist zumindest eine Leiterplatte 20 angeordnet. Die Leiterplatte 20 erstreckt sich normal zur Längsachse X, d. h. parallel zu der axialen Außenseite des Deckelteils 8 und dem dem Statorgehäuse 6 zugewandten Boden des Bodenteils 10.

Auf der dem Statorgehäuse 6 zugewandten Unterseite bzw. dem dem Statorgehäuse 6 zugewandten Boden des Bodenteils 10 befindet sich eine Einbuchtung bzw. Vertiefung 21, in welche die dem Elektronikgehäuse 4 zugewandte Axialseite des Statorgehäuses 6 eingreift. So wird ein formschlüssiger Eingriff des Axialendes des Statorgehäuses 6 mit dem Bodenteil 10 im Bereich dessen Vertiefung 21 geschaffen. Dieser formschlüssige Eingriff verhindert ein Verschieben des Elektronikgehäuses 4 quer zur Längsachse X relativ zu dem Statorgehäuse 6.

In dem hier gezeigten Ausführungsbeispiel, ist das Elektronikgehäuse 4 in nicht erfindungsgemäßer Weise durch ein spezielles Befestigungselement in Form eines Verriegelungsschiebers mit dem Statorgehäuse 6 verbunden. In diesem Ausführungsbeispiel ist der Verriegelungsschieber als Verriegelungsstift bzw. Befestigungsstift 24 ausgebildet. Dieser ist quer bzw. normal zur Längsachse X seitlich in das Bodenteil 10 des Elektronikgehäuses 4 eingesetzt. Dazu weist das Elektronikgehäuse 4 an einer Außenwandung bzw. Außenwand 23 eine Öffnung bzw. einen Eingriff 22 auf. Die Außenwand 23 ist an dem Bodenteil 10 ausgebildet und erstreckt sich umfänglich im Wesentlichen parallel zur Längsachse X. Die Längsachse Y des Eingriffs 22 und des Befestigungsstiftes 24 erstreckt sich radial bzw. normal zu der Längsachse X und schneidet diese. Der Eingriff 22 stellt die Öffnung einer Führung 26 im Bodenteil 10 des Elektronikgehäuses 4 dar. Auch die Führung 26 fluchtet mit der Längsachse Y und erstreckt sich somit quer zur Drehachse X des Rotors 5. Die Führung 26 nimmt den Befestigungsstift 24 so auf, dass dieser nur in Richtung seiner Längsachse Y und um diese drehbar in der Führung 26 bewegbar ist. Eine Bewegung quer zur Längsachse Y ist durch die Führung 26 im Wesentlichen ausgeschlossen.

Der Befestigungsstift 24 ist als Befestigungselement innerhalb der Außenkontur des Elektronikgehäuses 4 gelegen. Er steht nach außen nicht über die Außenwand 23, welche die Außenkontur definiert, vor. Durch die seitliche Anbringung ist er von der Außenseite des Elektronikgehäuses 4 auch dann zugänglich, wenn das Elektronikgehäuse 4 geschlossen ist, das heißt wenn das Bodenteil 10 mit dem Deckelteil 8 verschraubt ist.

Die Führung 26 für den Befestigungsstift 24 und die Vertiefung 21 im Bodenteil 10 für die Axialseite des Statorgehäuses 6 bilden einen gemeinsamen Freiraum, in welchen ein als Bügel 28 geformtes Blechstück eingreift. Der Bügel 28 ist an dem Statorgehäuse 6 befestigt und definiert bzw. umgibt eine Ausnehmung bzw. Öffnung 29. Diese Öffnung 29 fluchtet, wenn das Elektronikgehäuse 4 in der gezeigten Weise an das Axialende des Statorgehäuses 6 angesetzt ist, mit der Führung 26 in dem Unterteil 10 des Statorgehäuses, so dass der Befestigungsstift. 24 seitlich in die Führung 26 eingesetzt und dabei durch die Öffnung 29 geführt werden kann. Zwischen seinen beiden Längsenden ist der Bügel 28 im Profil bogenartig ausgeformt, um die Öffnung 29 zu formen. An seinen beiden Längsenden ist der Bügel 28 so abgewinkelt, dass plane Klemmflächen 30 gebildet werden. Dabei erstrecken sich die Klemmflächen 30 an beiden Längsenden in einer gemeinsamen Ebene normal zur Längsachse X. Die Klemmflächen 30 dienen der Fixierung des Bügels 28 am Statorgehäuse 6 und liegen an Gewindelöchern 32, welche am Statorgehäuse 6 vorzugsweise an der Axialseite ausgeformt sind, an. Die Klemmflächen 30 weisen jeweils ein Loch auf, welches mit einem der Gewindelöcher 32 an dem Statorgehäuse 6 fluchtet. Schrauben 33 greifen durch genannte Löcher in den Längsenden bzw. Klemmflächen 30 des Bügels 28 in die Gewindelöcher 32 des Statorgehäuses 6 ein und verschrauben so den Bügel 28 mit dem Statorgehäuse 6. Die bogenartige Ausformung 34 des Bügels 28 ragt vom Statorgehäuse 6 weg und greift in genannte Ausnehmung 21 im Bodenteil 10 des Elektronikgehäuses 4 im zusammengesetzten Zustand von Statorgehäuse 6 und Elektronikgehäuse 4 ein. Die Ausformung 34 bildet die Ausnehmung bzw. Öffnung 29. Die Öffnung 29 stellt in axialer Richtung X gesehen eine Hinterschneidung dar, welche von dem Verriegelungsschieber in Form des Befestigungsstiftes 24, welcher in der Führung 26 des Bodenteils 10 geführt ist, in axialer Richtung X hintergriffen wird. Wenn der Befestigungsstift 24 in die Führung 26 eingesetzt ist und die Öffnung 29 in dem Bügel 28 durchgreift, ist somit das Elektronikgehäuse 4 in axialer Richtung X an dem Statorgehäuse 6 fixiert.

Der seitlich in das Elektronikgehäuse 4 geführte Befestigungsstift 24, 24' bietet den Vorteil, dass im Elektronikgehäuse 4 keine in axialer Richtung X laufenden Befestigungselemente vorhanden sein müssen, die bei der Montage des vormontierten Elektronikgehäuses 4 in das Statorgehäuse 6 durch das Deckelteil 8 des Elektronikgehäuses 4 geführt werden müssen. Das ermöglicht, dass innerhalb des Elektronikgehäuses 4 Teile wie elektrische Bauelemente ohne Rücksicht auf die Befestigungselemente oder deren notwendige Durchführungen unter dem Deckelteil 8 angeordnet werden können. Ebenso ist es möglich, an der axialen Außenseite des Elektronikgehäuses 4 bzw. des Deckelteils 8 Bedien- und / oder Anzeigeelemente ohne Rücksicht auf notwendige Durchführungen für die Befestigungselemente anzuordnen bzw. genannte Bedien- und / oder Anzeigeelemente entsprechend groß gestalten zu können. Dennoch ist hier ein Befestigungselement in Form des Befestigungsstiftes 24, 24', 24" vorgesehen, welcher vollständig innerhalb der Außenkontur des Elektronikgehäuses 4 gelegen ist und dennoch derart von außen zugänglich ist, dass das Elektronikgehäuse 4 im vollständig montierten Zustand mit dem Statorgehäuse 6 verbunden werden kann.

Bei dem hier gezeigten Ausführungsbeispiel ist an dem Deckelteil 8 im Bereich der Deckfolie 14 ein Display 31 angeordnet. Das Display 31 liegt im Wesentlichen zentral bezüglich der Längsachse X und somit im Bereich der axialen Projektion der Stirnseite des Statorgehäuses 6. Dabei hat das Display 31 eine Größe, dass es in Projektion zumindest den Zentralbereich der axialen Stirnseite des Statorgehäuses 6 überdeckt, im Wesentlichen jedoch einen Großteil der Räche der axialen Stirnseite des Statorgehäuses 6 und insbesondere den Bereich, an welchem Gewindelöcher 32 in der axialen Stirnseite des Statorgehäuses 6 gelegen sind, überdeckt. Die Gewindelöcher 32 würden zur Befestigung eines herkömmlichen Elektronikgehäuses mittels Schrauben genutzt. Aufgrund der Größe des Displays 31 wäre es hier jedoch nicht möglich, Befestigungselemente durch das Deckelteil 8 hindurch in die Gewindelöcher 32 zu schrauben. Durch die Anordnung des von der Seite her eingeführten Befestigungselementes in Form des Befestigungsstiftes 24 ist dennoch eine sichere Befestigung des Elektronikgehäuses 8 an dem Statorgehäuse 6 möglich.

Der Bügel 28, 28', 28" wird mit seinen Klemmflächen 30 an den Gewindelöchern 32 des Statorgehäuses 6 angeschraubt, welche alternativ auch zur direkten Verschraubung eines Klemmenkastens bzw. Elektronikgehäuses genutzt werden können. D. h. an dieses Statorgehäuse 6 kann auch ein Elektronikgehäuse in herkömmlicher Weise mit Schrauben, welche einen Teil des Elektronikgehäuses, insbesondere dessen Bodenteil, durchgreifen, befestigt werden.

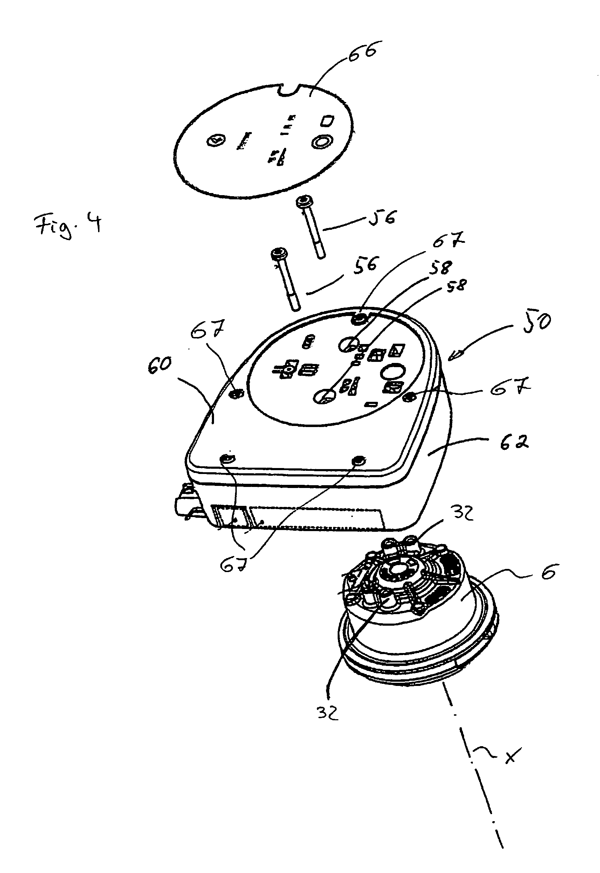

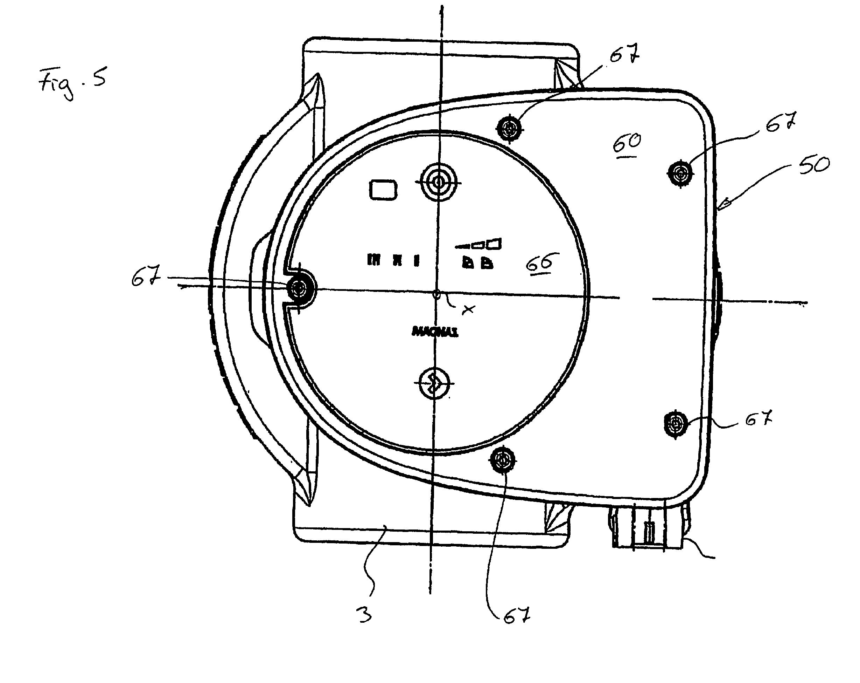

Die erfindungsgemäße Ausführungsform ist in den Figuren 4 - 6 gezeigt. Während in der ersten Ausführungsform die Befestigung zwischen Elektronikgehäuse 4 und Statorgehäuse 6 über ein seitlich in das Elektronikgehäuse 4 eingeführtes Befestigungselement in Form eines Befestigungsstiftes 24 realisiert ist, ist bei der erfindungsgemäßen Ausführungsform die Befestigung des Elektronikgehäuses 50, welches als vormontierte Baugruppe aus einem Deckelteil 60 und einem Bodenteil 62 besteht, axial an dem Statorgehäuse 6 über zwei Befestigungsschrauben 56 realisiert. Die Befestigungsschrauben 56 bilden Befestigungselemente, welche durch zwei Öffnungen 58 im Deckelteil 60 des Elektronikgehäuses 50 in das Elektronikgehäuse 50 eingreifen und das Bodenteil 62 mit dem Statorgehäuse 6 in axialer Richtung X verschrauben. Die Befestigungsschrauben 56 greifen dabei in die Gewindelöcher 32 im Statorgehäuse 6 ein, welche von der Axialseite gesehen bezüglich der Mittelachse X des Statorgehäuses 6 diametral entgegengesetzt angeordnet sind. Das Statorgehäuse 6 mit den Gewindelöchern 32 entspricht dabei der Ausgestaltung des Statorgehäuses 6, welche anhand des ersten Ausführungsbeispiels in den Fig. 1 bis 6 beschrieben wurde.

Die Öffnungen 58 an der Oberseite des Deckelteils 60 befinden sich in einem Bereich, welcher nach Montage des Elektronikgehäuses 50 auf das Statorgehäuse 52 durch eine Deckfolie 66 abgedeckt wird. Diese ist mit dem Deckelteil 60 dicht verklebt. So werden die Öffnungen 58 nach dem Einsetzen der Befestigungsschrauben 56 zur Außenseite hin durch die Deckfolie 66 dicht verschlossen. Im montierten Zustand des Pumpenaggregats 54 ist somit der Zugriff auf die Befestigungsschrauben 56 durch die Deckfolie 66 verhindert.

Das Deckelteil 60 ist mit dem Bodenteil 62 über Schrauben 67 verbunden, wobei die Schrauben 67 an der axialen Stirnseite des Deckelteiles 60 nahe dem Außenumfang über den Umfang verteilt angeordnet sind. Die Ausgestaltung des Deckelteils 60 und die Anordnung und Ausgestaltung der Schrauben 67 entspricht hier der Ausgestaltung des Deckelteils 8 sowie der Schrauben 13 in dem ersten anhand der Fig. 1 bis 3 beschriebenen Ausführungsbeispiel, so dass diesbezüglich auf die obige Beschreibung verwiesen wird. Die Deckfolie 66 weist an ihrer Außenumrandung eine Aussparung auf, welche mit einer der Schraubenführungen für eine Schraube 67 fluchtet. So überdeckt die Deckfolie 66 nicht die Köpfe der Schrauben 67. Somit besteht die Möglichkeit, das Deckelteil 60 mit der Deckfolie 66 durch Lösen der Schrauben 67 vom Bodenteil 62 zu lösen. So kann das Elektronikgehäuse 50 beispielsweise zu Reparatur- oder Wartungszwecken geöffnet werden. Ferner ermöglicht das Abnehmen des Deckelteils 60 auch nach Anbringen der Deckfolie 66 einen Zugang zu den Befestigungsschrauben 56 im Inneren des Elektronikgehäuses 50.

Innerhalb des Elektronikgehäuses 50 ist eine Leiterplatte 68 mit elektronischen Bauelementen angeordnet. Ferner sind im Inneren des Bodenteils 62 Führungshülsen 70 ausgebildet. Die Führungshülsen 70 sind axial am Bodenteil 62 angeordnet und einstückig mit diesem gegossen. Von oben betrachtet fluchten die Führungshülsen 70 mit den Öffnungen 58 im Deckelteil 60. Dabei erstrecken sich die Führungshülsen 70 ausgehend vom Boden des Bodenteils 62 bis an das Deckelteil 60. Dabei greifen die Führungshülsen 70 mit ihren freien Enden in die Öffnungen 58 von der Innenseite des Elektronikgehäuses 50 her ein. Die Befestigungsschrauben 58 liegen mit ihren Köpfen an den axialen Stirnseiten der rohrförmigen Führungshülsen 70 an, während sich die Schäfte der Schrauben 56 durch die Führungshülsen 70 hindurch in die Gewindelöcher 32 des Statorgehäuses 6 erstrecken und in diese eingreifen. So wird das Elektronikgehäuse 50 axial gegen die axiale Stirnseite des Statorgehäuses 6 gedrückt. Dabei greift das Statorgehäuse 6 mit seinem axialen Stirnende, wie anhand der ersten Ausführungsform beschrieben, in eine hier von einem Kragen gebildete Vertiefung 21 an der dem Statorgehäuse 6 zugewandten Außenseite des Bodens des Elektronikgehäuses 50 formschlüssig ein. Der Eingriff in die Vertiefung 21 bewirkt einen Formschluss in Richtung quer bzw. radial zur Längsachse X, so dass ein seitliches Verschieben des Klemmenkastens verhindert wird. Darüber hinaus kann über die Umfangswandung der Vertiefung 21 eine dichte Anlage des Elektronikgehäuses an dem Statorgehäuse 6 erreicht werden, wozu am Umfang der Vertiefung 21 eine Dichtung angeordnet, vorzugsweise angegossen, sein kann.

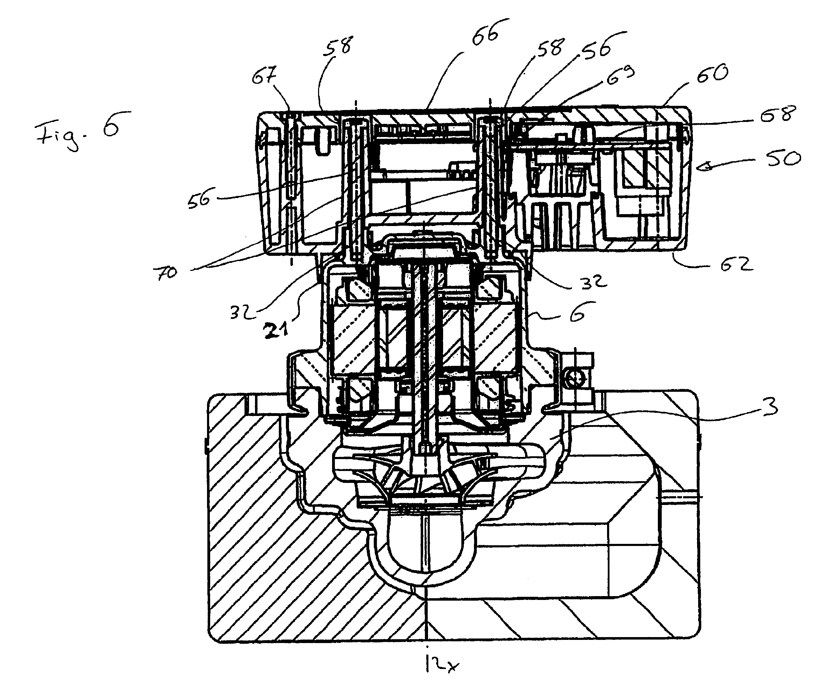

Wie in Fig. 6 zu erkennen, sind die Führungshülsen 70 in ihrer Länge so ausgebildet, dass die Schraubenköpfe der Befestigungsschrauben 56, welche an den axialen Stirnseiten der Führungshülsen 70 anliegen, axial nicht über die Außenseite des Deckelteils 60 vorstehen, so dass die Außenseite des Deckels 60 über die plane Deckfolie 66 bündig und dicht verschlossen werden kann.

Auch bei dieser zweiten Ausführungsform liegen die Befestigungselemente in Form der Befestigungsschrauben 56 vollständig innerhalb der Außenkontur des Elektronikgehäuses 50. Darüber hinaus sind sie, solange die Deckfolie 66 nicht auf das Deckelteil 60 aufgeklebt ist, von der Außenseite des Elektronikgehäuses 50 her zugänglich, auch wenn das Deckelteil 60 mit den Schrauben 67 mit dem Bodenteil 62 verschraubt ist. Dies ermöglicht es, zunächst das Elektronikgehäuse 50 vollständig zu montieren, gegebenenfalls zu testen und dann im vollständig montierten, verschlossenen Zustand mittels der Befestigungsschrauben 56 an das Statorgehäuse 6 anzuschrauben. Anschließend wird dann die Deckfolie 66 auf das Deckelteil 60 aufgeklebt und damit die Öffnungen 58 verschlossen. Wenn später das Deckelteil 60 durch Lösen der Schrauben 67 abgenommen wird, verbleibt dennoch das Bodenteil 62 mit den darin angeordneten Bauteilen, insbesondere der Leiterplatte 68, fest mit dem Statorgehäuse 6 verbunden, da die Befestigungsschrauben 56 nur an dem Bodenteil 62 angreifen. Allerdings ist nach Abnahme des Deckelteils 60 dann auch durch Lösen der Befestigungsschrauben 56 das Bodenteil 62 wieder von dem Statorgehäuse 6 lösbar.

Wesentlich bei diesem Ausführungsbeispiel ist, dass im Inneren des Elektronikgehäuses 60 oberhalb der Köpfe der Befestigungsschrauben 56 keinerlei Bauteile angeordnet sind, so dass diese auch im montierten und geschlossenen Zustand des Elektronikgehäuses 50, solange die Deckfolie 66 nicht aufgebracht ist, zugänglich sind. Eine der Führungshülsen 70 erstreckt sich bei dieser Ausführungsform durch eine Ausnehmung 69 am Rande der Leiterplatte 68 hindurch, d. h. hier schneidet die Führungshülse 70 die Leiterplatte 68. Die Führungshülse 70 stellt dabei sicher, dass beim Einsetzen der Schraube 56 die Leiterplatte 68 nicht berührt und beschädigt werden kann.

### Bezugszeichenliste

- 2: - Pumpenaggregat
- 3: - Pumpengehäuse
- 4: - Elektronikgehäuse
- 5: - Rotor
- 6: - Statorgehäuse
- 7: - Laufrad
- 8: - Deckelteil
- 9: - Stator
- 10: - Bodenteil
- 11: - Zwischenteil
- 12: - Öffnung
- 13: - Schrauben
- 14: - Deckfolie
- 15: - Kabeldurchführung
- 16: - Befestigungshülsen
- 18: - elektrischer Anschluss
- 20: - Leiterplatte
- 21: - Vertiefung
- 22: - Eingriff
- 23: - Außenwand
- 24: - Befestigungsstift
- 24': - Befestigungsstift mit axialem Kern
- 26: - Führung
- 28, 28', 28": - Bügel
- 29: - Öffnung
- 30: - Klemmflächen
- 31: - Display
- 32: - Gewindelöcher
- 33: - Schrauben
- 34, 34', 34": - bogenartige Ausformung des Bügels
- 35: - konkave Einbuchtung
- 36: - Kopfteil
- 38: - erstes Führungsstück
- 40: - Nut
- 42, 42': - Riegelstück
- 44, 44': - zweites Führungsstück
- 45: - Kern
- 47: - Mitnehmerprofil
- 50: - Elektronikgehäuse
- 56: - Befestigungsschraube
- 58: - Öffnung
- 60: - Deckelteil
- 62: - Bodenteil
- 64: - Gewindehülse
- 66: - Deckfolie
- 67: - Schraube
- 68: - Leiterplatte
- 69: - Ausnehmung
- 70: - Führungshülse

- X: - Drehachse des Rotors
- Y: - Längsachse Befestigungsstift

## Patentansprüche

1. Pumpenaggregat mit einem Elektromotor, welcher ein Statorgehäuse (6) und ein außen am Statorgehäuse (6) befestigtes Elektronikgehäuse (4; 50) aufweist,
wobei
das Elektronikgehäuse (4; 50) mit dem Statorgehäuse (6) über zumindest ein Befestigungselement (24, 24'; 56) verbunden ist, welches innerhalb einer von den Außenwandungen des Elektronikgehäuses (4; 50) begrenzten Außenkontur des Elektronikgehäuses (4; 50) gelegen ist und bei geschlossenem Elektronikgehäuse (4; 50) zugänglich ist, das Elektronikgehäuse (4); (50) zumindest ein Bodenteil (10); (62) und ein Deckelteil (8); (60) aufweist, wobei das zumindest eine Befestigungselement (24); (56) derart angeordnet ist, dass das Deckelteil (8); (60) von dem Bodenteil (10); (62) unabhängig von dem Befestigungselement (24); (56) lösbar ist,
**dadurch gekennzeichnet,**
**dass** das Bodenteil (62) mit zumindest einer Schraube (56) als Befestigungselement an dem Statorgehäuse (6) befestigt ist und das Deckelteil (60) zumindest eine der Schraube (56) in Richtung deren Längsachse gegenüberliegende Öffnung (58) aufweist, wobei der Raum zwischen der Schraube (56) und der Öffnung (58) frei ist.

2. Pumpenaggregat nach Anspruch 1, **dadurch gekennzeichnet, dass** das Elektronikgehäuse (4); (50) eine Grundfläche aufweist, welche sich an zumindest einer Seite über eine Außenkontur des Statorgehäuses (6) hinaus erstreckt und vorzugsweise größer als eine angrenzende Außenseite des Statorgehäuses (6) ist.

3. Pumpenaggregat nach einem der vorangehenden Ansprüche, **dadurch gekennzeichnet, dass** das Elektronikgehäuse (4); (50) axial an dem Statorgehäuse (6) befestigt ist.

4. Pumpenaggregat nach einem der Ansprüche 1 bis 3, **dadurch gekennzeichnet, dass** Deckelteil (8); (60) und Bodenteil (10); (62) des Elektronikgehäuses (4); (50) miteinander verschraubt sind.

5. Pumpenaggregat nach einem der vorangehenden Ansprüche, **dadurch gekennzeichnet, dass** das Bodenteil (62) mit zwei Schrauben (56) an dem Statorgehäuse befestigt ist.

6. Pumpenaggregat nach einem der vorangehenden Ansprüche, **dadurch gekennzeichnet, dass** die Öffnung (58) im Deckelteil (60) durch eine an der dem Bodenteil (62) abgewandten Seite des Deckelteils (60) angeordnete Deckfolie (66) überdeckt ist.

7. Pumpenaggregat nach Anspruch 6, **dadurch gekennzeichnet, dass** die Deckfolie (66) mit dem Deckelteil (60) verklebt ist.

8. Pumpenaggregat nach Anspruch 6 oder 7, **dadurch gekennzeichnet, dass** die Schrauben (67), welche das Deckelteil (60) mit dem Bodenteil (62) verbinden, nicht von der Deckfolie (66) überdeckt sind.

9. Pumpenaggregat nach einem der Ansprüche 4 bis 7, **dadurch gekennzeichnet, dass** die zumindest eine Schraube (56), mit welcher das Bodenteil (62) an dem Statorgehäuse (6) befestigt ist, in ein Innengewinde (32) an einer Wandung des Statorgehäuses (6) eingreift.

10. Pumpenaggregat nach einem der vorangehenden Ansprüche, **dadurch gekennzeichnet, dass** zumindest eine Führungshülse (70) im Bodenteil (62) ausgebildet ist, durch welche sich die Schraube (56) erstreckt.

11. Pumpenaggregat nach Anspruch 10, **dadurch gekennzeichnet, dass** sich die Führungshülse (70) im Bodenteil (62) bis zu der Öffnung (58) im Deckelteil (60) erstreckt oder sich bis in die Öffnung (58) in dem Deckelteil (60) hinein erstreckt.

12. Pumpenaggregat nach Anspruch 10 oder 11, **dadurch gekennzeichnet, dass** die Schraube (56) mit einem Schraubenkopf oder als Mutter ausgebildet an einer axialen Stirnseite der Führungshülse (70) anliegt.

13. Pumpenaggregat nach einem der vorangehenden Ansprüche, **dadurch gekennzeichnet, dass** die Schraube (56) nicht über die dem Bodenteil (62) abgewandte Stirnseite des Deckelteils (60) hervorsteht.

14. Pumpenaggregat nach einem der vorangehenden Ansprüche, **dadurch gekennzeichnet, dass** im Elektronikgehäuse (50) zumindest eine Leiterplatte (68) angeordnet ist, welche zumindest eine Ausnehmung (69) aufweist, die der Schraube (56) in Richtung deren Längsachse gegenüberliegt oder durch welche sich die Schraube (56) hindurch erstreckt.

15. Pumpenaggregat nach Anspruch 14 und einem der Ansprüche 11 bis 13, **dadurch gekennzeichnet, dass** sich die Führungshülse (70) durch die Ausnehmung (69) in der Leiterplatte (68) erstreckt.

16. Pumpenaggregat nach einem der vorangehenden Ansprüche, **dadurch gekennzeichnet, dass** zumindest eine elektrische Verbindung, insbesondere eine elektrische Steckverbindung, zwischen Statorgehäuse (6) und Elektronikgehäuse (4); (50) vorhanden ist.

17. Pumpenaggregat nach einem der vorangehenden Ansprüche, **dadurch gekennzeichnet, dass** es als Umwälzpumpenaggregat vorzugsweise mit einem nasslaufenden Elektromotor ausgebildet ist.

## Claims

1. A pump assembly with an electric motor which comprises a stator housing (6) and an electronics housing (4; 50) fastened at the outside on the stator housing (6), wherein the electronics housing (4; 50) is connected to the stator housing (6) via at least one fastening element (24, 24'; 56), said fastening element being situated within an outer contour of the electronics housing (4; 50) which is delimited by the outer walls of the electronics housing (4; 50) and being accessible given a closed electronics housing (4; 50), the electronics housing (4; 50) comprises at least one base part (10); (62) and a cover part (8); (60), wherein the at least one fastening element (24); (56) is arranged in a manner such that the cover part (8); (60) is releasable from the base part (10); (62) independently of the fastening element (24); (56), **characterised in that** the base part (62) is fastened with at least one screw (56) as a fastening element, on the stator housing (6), and the cover part (60) comprises at least one opening (58) lying opposite the screw (56) in the direction of the longitudinal axis of this screw, wherein the space between the screw (56) and the opening (58) is free.

2. A pump assembly according to claim 1, **characterised in that** the electronics housing (4); (50) comprises a base surface which on at least one side extends beyond an outer contour of the stator housing (6) and preferably is larger than an adjacent outer side of the stator housing (6).

3. A pump assembly according to one of the preceding claims, **characterised in that** the electronics housing (4); (50) is fastened axially on the stator housing (6).

4. A pump assembly according to one of the claims 1 to 3, **characterised in that** the cover part (8); (60) and the base part (10); (62) of the electronics housing (4); (50) are screwed to one another.

5. A pump assembly according to one of the preceding claims, **characterised in that** the base part (62) is fastened on the stator housing by two screws (56).

6. A pump assembly according to one of the preceding claims, **characterised in that** the opening (58) in the cover part (60) is covered by a cover foil (66) arranged on the side of the cover part (60) which is away from the base part (62).

7. A pump assembly according to claim 6, **characterised in that** the cover foil (66) is bonded to the cover part (60).

8. A pump assembly according to claim 6 or 7, **characterised in that** the screws (67) which connect the cover part (60) to the base part (62) are not covered by the cover foil (66).

9. A pump assembly according to one of the claims 4 to 7, **characterised in that** the at least one screw (56), with which the base part 62) is fastened on the stator housing (6), engages into an inner thread (32) on a wall of the stator housing (6).

10. A pump assembly according to one of the preceding claims, **characterised in that** at least one guide sleeve (70) is formed in the base part (62), through which guide sleeve the screw (56) extends.

11. A pump assembly according to claim 10, **characterised in that** the guide sleeve (70) in the base part (62) extends up to the opening (58) in the cover part (60) or to into the opening (58) in the cover part (60).

12. A pump assembly according to claim 10 or 11, **characterised in that** the screw (56) with a screw head or designed as a nut, bears on an axial face side of the guide sleeve (70).

13. A pump assembly according to one of the preceding claims, **characterised in that** the screw (56) does not project beyond the face side of the cover part (60) which is away from the base part (62).

14. A pump assembly according to one of the preceding claims, **characterised in that** at least one circuit board (68) is arranged in the electronics housing (50), said circuit board comprising at least one recess (69) which lies opposite the screw (56) in the direction of its longitudinal axis or through which the screw (56) extends.

15. A pump assembly according to claim 14 and one of the claims 11 to 13, **characterised in that** the guide sleeve (70) extends through the recess (69) in the circuit board (68).

16. A pump assembly according to one of the preceding claims, **characterised in that** at least one electric connection, in particular an electrical plug-in connection, is present between the stator housing (6) and the electronics housing (4); (50).

17. A pump assembly according to one of the preceding claims, **characterised in that** it is designed as a circulation pump assembly, preferably with a wet-running electric motor.

## Revendications

1. Groupe pompe comprenant un moteur électrique qui présente un carter de stator (6) et un carter d'électronique (4; 50) fixé extérieurement au carter de stator (6),
dans lequel
le carter d'électronique (4; 50) est assemblé au carter de stator (6) au moyen d'au moins un élément de fixation (24, 24'; 56) qui est situé à l'intérieur d'un contour extérieur du carter d'électronique (4; 50) limité par les parois extérieures du carter d'électronique (4; 50) et qui est accessible lorsque le carter d'électronique (4; 50) est fermé, et le carter d'électronique (4; 50) présente au moins une partie fond (10); (62) et une partie couvercle (8); (60), ledit au moins un élément de fixation (24); (56) étant disposé de telle sorte que la partie couvercle (8); (60) peut être détachée de la partie fond (10); (62) indépendamment de l'élément de fixation (24); (56),
**caractérisé**
**en ce que** la partie fond (62) est fixée au carter de stator (6) au moyen d'au moins une vis (56) constituant un élément de fixation et la partie couvercle (60) présente au moins une ouverture (58) qui fait face à la vis (56) dans la direction de l'axe longitudinal de celle-ci, l'espace entre la vis (56) et l'ouverture (58) étant libre.

2. Groupe pompe selon la revendication 1, **caractérisé en ce que** le carter d'électronique (4); (50) présente une surface de base qui se prolonge, sur au moins un côté, au-delà du contour extérieur du carter de stator (6) et qui est de préférence plus grande qu'un côté extérieur adjacent du carter de stator (6).

3. Groupe pompe selon l'une des revendications précédentes, **caractérisé en ce que** le carter d'électronique (4); (50) est fixé au carter de stator (6) dans la direction axiale.

4. Groupe pompe selon l'une des revendications 1 à 3, **caractérisé en ce que** la partie couvercle (8); (60) et la partie fond (10); (62) du carter d'électronique (4); (50) sont vissées ensemble.

5. Groupe pompe selon l'une des revendications précédentes, **caractérisé en ce que** la partie fond (62) est fixée au carter de stator au moyen de deux vis (56).

6. Groupe pompe selon l'une des revendications précédentes, **caractérisé en ce que** l'ouverture (58) ménagée dans la partie couvercle (60) est recouverte par une lamelle de recouvrement (66) disposée contre le côté de la partie couvercle (60) qui est à l'opposé de la partie fond (62).

7. Groupe pompe selon la revendication 6, **caractérisé en ce que** la lamelle de recouvrement (66) est collée à la partie couvercle (60).

8. Groupe pompe selon la revendication 6 ou 7, **caractérisé en ce que** les vis (67) qui assemblent la partie couvercle (60) à la partie fond (62) ne sont pas recouvertes par la lamelle de recouvrement (66).

9. Groupe pompe selon l'une des revendications 4 à 7, **caractérisé en ce que** ladite au moins une vis (56) avec laquelle la partie fond (62) est fixée au carter de stator (6) est en prise dans un filetage intérieur (32) prévu dans une paroi du carter de stator (6).

10. Groupe pompe selon l'une des revendications précédentes, **caractérisé en ce que**, dans la partie fond (62), est formée au moins une douille de guidage (70) à travers laquelle s'étend la vis (56).

11. Groupe pompe selon la revendication 10, **caractérisé en ce que** la douille de guidage (70) formée dans la partie fond (62) s'étend jusqu'à l'ouverture (58) ménagée dans la partie couvercle (60), ou s'étend jusque dans l'ouverture (58) ménagée dans la partie couvercle (60).

12. Groupe pompe selon la revendication 10 ou 11, **caractérisé en ce que** la vis (56), qui est munie d'une tête de vis ou qui forme un écrou, est appuyée contre un côté axial frontal de la douille de guidage (70).

13. Groupe pompe selon l'une des revendications précédentes, **caractérisé en ce que** la vis (56) ne se prolonge pas au-delà du côté frontal de la partie couvercle (60) qui est à l'opposé de la partie fond (62).

14. Groupe pompe selon l'une des revendications précédentes, **caractérisé en ce que**, dans le carter d'électronique (50), est disposée au moins une plaquette (68) qui présente au moins un évidement (69) situé en regard de la vis (56) dans la direction de son axe longitudinal ou à travers lequel s'étend la vis (56).

15. Groupe pompe selon la revendication 14 et l'une des revendications 11 à 13, **caractérisé en ce que** la douille de guidage (70) s'étend à travers l'évidement (69) ménagé dans la plaquette (68).

16. Groupe pompe selon l'une des revendications précédentes, **caractérisé en ce qu'**au moins une liaison électrique, en particulier une liaison électrique à broches, est prévue entre le carter de stator (6) et le carter d'électronique (4); (50).

17. Groupe pompe selon l'une des revendications précédentes, **caractérisé en ce qu'**il est constitué par un groupe pompe de circulation, de préférence équipé d'un moteur électrique à rotor noyé.
